# NEUE EUROPÄISCHE PATENTSCHRIFT

(11) **EP 2 336 817 B2**
(45) Veröffentlichungstag und Bekanntmachung des Hinweises auf die Entscheidung über den Einspruch: **16.08.2023**
(45) Hinweis auf die Patenterteilung: 17.06.2020
(21) Anmeldenummer: 10193888.4
(22) Anmeldetag: 07.12.2010
(51) Int. Cl.: G02B 21/00

(54) **Vorrichtung zum Untersuchen einer Probe umfassend ein Mikroskop**
Device for inspecting a sample comprising a microscope
Dispositif destiné à l'analyse d'un échantillon comprenant un microscope

(30) Priorität: 07.12.2009 DE 102009057304
(43) Veröffentlichungstag der Anmeldung: 22.06.2011
(73) Patentinhaber: Leica Microsystems CMS GmbH, 35578 Wetzlar (DE)
(72) Erfinder: Birk, Holger, 74909 Meckesheim (DE); Seyfried, Volker, 69226 Nußloch (DE)
(74) Vertreter: Schaumburg und Partner Patentanwälte mbB

(56) Entgegenhaltungen:
- EP-A2- 1 094 308
- EP-A2- 1 691 180
- DE-A1-102007 024 074
- US-A1- 2005 042 428
- US-A1- 2007 114 362
- US-A1- 2007 206 276
- US-A1- 2008 192 231
- Grigoriev, E. et al: "Silicon photomultipliers and their bio-medical applications", Nuclear Instruments & Methods in Physics Research. Section A, vol. 571, no. 1-2, 26 January 2007 (2007-01-26), pages 130-133,
- Pawley James B.: "Multi-Photon" In: "Handbook of Biological Confocal Microscopy. 3rd Ed.", 1 January 2006 (2006-01-01) pages 447, 535-542,
- A.G. Stewart et al: "Properties of silicon photon counting detectors and silicon photomultipliers", JOURNAL OF MODERN OPTICS, vol. 56, no. 2-3, 20 January 2009 (2009-01-20), pages 240-252,
- Hamamatsu Photonics - Catalogue: "MPPC Multi-Pixel Photon Counter", Hamamatsu Photonics - Catalogue, 1 January 2007 (2007-01-01), pages 1-16,
- Wokosin D.L., Amos W.B., White J.G.: "Detection sensitivity enhancements for fluorescence imaging with multi-photon excitation microscopy", Engineering in Medicine and Biology Society,1998. Proceedings of the20th Annual International Conference of the IEEE, vol. 4, 29 October 1998 (1998-10-29), - 1 November 1998 (1998-11-01), pages 1707-1714,
- N Otte: "The Silicon Photomultiplier -A new device for High Energy Physics, Astroparticle Physics, Industrial and Medical Applications", SNIC Symposium SNIC Symposium, Stanford, California, 3 April 2006 (2006-04-03), pages 1-9,

## Beschreibung

Die Erfindung betrifft eine Vorrichtung zum Untersuchen einer Probe, umfassend ein Mikroskop mit einer Lichtquelle, einer Scaneinheit und mit einem Detektor. Die Lichtquelle erzeugt einen Beleuchtungslichtstrahl. Die Scaneinheit lenkt den über ein Objektiv auf die Probe gelenkten Beleuchtungslichtstrahl ab und bewegt dadurch einen Fokusbereich des Beleuchtungslichtstrahls innerhalb eines vorgegebenen Scanfelds auf oder in der Probe. Der Detektor detektiert einen von der Probe ausgehenden und von der Scaneinheit nicht abgelenkten Detektionslichtstrahl.

Beim optischen Abtasten der Probe mit einem Scan-Mikroskop wird zu einem vorgegebenen Zeitpunkt ein ausgewählter punktförmiger oder zeilenförmiger Bereich der Probe optisch abgetastet. Dazu fokussiert eine Fokussieroptik, insbesondere ein Objektiv, des Mikroskops den Beleuchtungslichtstrahl auf den ausgewählten Bereich der Probe und detektiert den Anteil des Lichts, der von dem ausgewählten Bereich beispielsweise aufgrund von Fluoreszenzeffekten in der Probe zurückgeworfen wird. Die gewonnenen Bilddaten werden gespeichert. Nachfolgend werden weitere punktförmige bzw. zeilenförmige Bereiche untersucht, die vorzugsweise aneinander grenzen und beispielsweise eine Linie bzw. eine Fläche bilden. Auf diese Weise kann ein großer Bereich der Probe Punkt für Punkt und Zeile für Zeile optisch abgetastet werden. Ferner ist auch eine Abtastung in Richtung parallel zu dem Beleuchtungslichtstrahl möglich, so dass insgesamt ein dreidimensionaler Bereich, insbesondere ein Volumen, abtastbar ist. Die Daten der einzelnen Punkte werden nachfolgend mittels einer Datenverarbeitungsanlage zu einem Gesamtbild des untersuchten Bereichs der Probe zusammengesetzt.

Bei konfokalen Scan-Mikroskopen werden regelmäßig Detektoren eingesetzt, die allgemein als NDDs (Non-Descanned-Detector) bezeichnet werden, da diese dazu vorgesehen sind, Detektionslichtstrahlen zu detektieren, die auf die Detektoren treffen, ohne über die Scaneinheit rückgeführt zu werden, und somit im Gegensatz zu den Beleuchtungslichtstrahlen nicht von einer Scaneinheit des Scan-Mikroskops abgelenkt werden. NDDs werden bei bekannten Mikroskopen sowohl objektiv- als auch kondensorseitig angebracht, wobei sie im Falle der objektivseitigen Anordnung auch als RLD bzw. bei der kondensorseitigen Anordnung auch als TLD bezeichnet werden. Die detektierten Ereignisse werden für jeden Detektor einzeln oder für alle Detektoren kombiniert ausgewertet. Als photosensitive Bauelemente werden bei bekannten NDDs Fotomultiplier oder EMCCDs (Elektron-Multiplying-CCD) verwendet. Diese erhalten gegenüber anderen photosensitiven Bauelementen den Vorzug, da deren lichtempfindlicher Bereich relativ groß gestaltet werden kann, was nötig ist, da sich aufgrund der Scanbewegung des Beleuchtungslichtstrahls auch der Detektionslichtstrahl auf der photosensitiven Oberfläche des Detektors zumindest geringfügig bewegt und da dies eine minimale Größe des lichtempfindlichen Bereichs des photosensitiven Bauelements von typischerweise 3mm x 3mm erfordert, um Licht von allen Scanpositionen auf den lichtempfindlichen Bereich lenken zu können. Bei dem Detektionslicht handelt es sich insbesondere um von der Probe abgestrahltes Fluoreszenzlicht.

Zum Detektieren der Detektionsstrahlen, die über den Scanner rückgeführt werden, werden als Lichtdetektoren unter anderen Lawinenfotodioden (Avalanche-Photo-Diodes kurz APDs) verwendet. Diese sind wesentlich empfindlicher als Fotomultiplier. Die maximale Größe des lichtempfindlichen Bereichs einer derartigen Lawinenfotodiode beträgt bei bekannten Lawinenfotodioden jedoch nur ca. 50µm x 50µm.

Aus dem Dokument US 2007/206276 A1 ist ein Scanmikroskop mit einem Non-Descanned-Detektor bekannt, bei dem mehrere Probenorte gleichzeitig punktförmig mittels mehrerer Teilstrahlen beleuchtet werden. Zum Abrastern der Probe ist ein Scanspiegel vorhanden, durch den die Auftrefforte der Teilstrahlen auf der Probe simultan verschoben werden können. Die von der Probe ausgehenden Detektionslichtbündel werden zu dem Non-Descanned-Detektor umgelenkt, der eine CCD-Kamera mit einem zweidimensionalen Sensorfeld umfasst.

Es ist Aufgabe der vorliegenden Erfindung, eine Vorrichtung zum Untersuchen einer Probe umfassend ein Mikroskop zu schaffen, die es ermöglicht, nicht über eine Scaneinheit zurückgeführte Detektionsstrahlen mit einer hohen Sensitivität zu detektieren.

Die Aufgabe wird gelöst durch die Merkmale des Patentanspruchs 1. Vorteilhafte Ausgestaltungen sind in den Unteransprüchen angegeben.

Die Erfindung zeichnet sich dadurch aus, dass als Detektor eine Detektoranordnung angeordnet ist, die zwei oder mehr photosensitive Halbleiterelemente umfasst. Die Verwendung mehrerer Halbleiterelemente für einen Detektor, insbesondere für die Detektoranordnung ermöglicht, mit der lichtempfindlichen Fläche der photosensitiven Halbleiterelemente einen großen Bereich abzudecken und somit die sich bewegenden Detektionslichtstrahlen in jeder Scanposition zu detektieren. Ferner ermöglicht die Verwendung der photosensitiven Halbleiterelemente eine hohe Detektorempfindlichkeit, insbesondere eine hohe Quanteneffizienz, und eine hohe Zeitauflösung der detektierten Ereignisse. Ferner kann gegenüber bekannten nicht konfokal arbeitenden Mikroskopen, bei denen unter anderem PMT-Röhren als Detektoren verwendet werden, die Baugröße des Mikroskops, insbesondere der Detektoranordnung besonders gering gehalten werden. Dies spielt besonders dann eine wesentliche Rolle, wenn mehrere Detektoren in einem Gerät verwendet werden sollen, beispielsweise zum Detektieren von unterschiedlichen spektralen Bereichen.

Die Detektoranordnung kann auch als Detektorarray bezeichnet werden. Die Detektoranordnung mit den mehreren photosensitiven Halbleiterelementen kann als einzelnes Bauelement hergestellt werden und in der Vorrichtung eingebaut sein. Ferner kann die Vorrichtung auch mehrere Detektoranordnungen, die jeweils zwei oder mehr photosensitive Halbleiterelemente aufweisen, umfassen. Eines der Halbleiterelemente ist beispielsweise eine Photodiode, insbesondere eine Lawinenfotodiode (APD). Die Halbleiterdioden, insbesondere die Lawinenfotodioden im Geiger-Betrieb setzen für jedes detektierte Photon eine nahezu gleichgroße Elektronenlawine frei, wodurch gegenüber Photomultipliern (PMT) oder verstärkten CCDs eine Rauschquelle entfällt, die dort aus der unterschiedlichen Anzahl frei gesetzter Elektronen resultiert. Ein weiterer Vorteil der APD's im Vergleich zu herkömmlichen PMT's ist, dass diese auch in einem starken Magnetfeld einwandfrei funktionieren. Ferner ist die zeitliche Auflösung bei APD's besser als bei PMT's (z.B. bei FLIM). Somit sind APD's für Einzelphototnen-Messungen (z.B. FCS) besser geeignet als PMT's.

Die Quanteneffizienz kann weiter erhöht werden, indem entlang des Detektionsstrahlengangs vor, insbesondere unmittelbar vor jedem Halbleiterelement je eine Linse angeordnet ist, die den Detektionslichtstrahl auf das entsprechende Halbleiterelement, insbesondere den photosensitiven Bereich des entsprechenden Halbleiterelements, fokussiert. So kann einfach Detektionslicht, das ohne die Linsen auf einen lichtunempfindlichen Bereich eines oder mehrerer Halbleiterelemente, beispielsweise zwischen zwei der Halbleiterelemente, treffen würde, auf den photosensitiven Bereich eines der angrenzenden Halbleiterelemente fokussiert werden. Dadurch gehen keine Detektionslichtstrahlen verloren. Die einzelnen Linsen können auch als Einheit zusammengefasst sein und/oder als Mikrolinsenarray bezeichnet werden.

Ein Verringern der Totzeit zwischen zwei detektierbaren Ereignissen und ein Erhöhen der Dynamik der Detektoranordnung wird dadurch erreicht, dass zumindest zwei der Halbleiterelemente parallel geschaltet sind. Ferner kann so ein Ausgang der Detektoranordnung mehreren parallel angeordneten Halbleiterelementen oder parallelen Reihen von Halbleiterelementen zugeordnet werden. Dies trägt dazu bei, die Struktur der Detektoranordnung zu optimieren.

Die Quanteneffizienz wir in einer vorteilhaften Ausgestaltung weiter erhöht, indem lichtunempfindliche Strukturen der Halbleiterelemente auf einer von dem Detektionslichtstrahl abgewandten Seite der Halbleiterelemente angeordnet sind. Diese besondere Anordnung der lichtunempfindlichen Strukturen wird regelmäßig auch als "back-thinned" oder "backilluminated technology" bezeichnet. Diese Technologie ermöglicht, eine Photonendetektionswahrscheinlichkeit von über 80 % pro Halbleiterelement zu erzielen.

Aufgrund der hohen Photonendetektionswahrscheinlichkeit und dem günstigen Rauschverhalten ist die Sensitivität der Detektoranordnung gegenüber bekannten Detektoren für nicht konfokal arbeitende Scan-Mikroskope besonders hoch. Ferner hat die Detektoranordnung bei vorgegebener Beleuchtungsstärke ein besonders gutes Signal-RauschVerhältnis.

Die Detektoranordnung mit den photosensitiven Halbleiterelementen kann auch bei einem konfokalen Mikroskop mit einem Scantisch verwendet werden.

Ausführungsbeispiele der Erfindung sind im Folgenden anhand von schematischen Zeichnungen näher erläutert.

Es zeigen:
- Figur 1: ein Scan-Mikroskop,
- Figur 2: ein Schaltbild einer ersten Ausführungsform einer Detektoranordnung,
- Figur 3: ein Schaltbild einer zweiten Ausführungsform der Detektoranordnung,
- Figur 4: eine Draufsicht auf eine dritte Ausführungsform Detektoranordnung, und
- Figur 5: eine Seitenansicht der dritten Ausführungsform der Detektoranordnung.

Elemente gleicher Konstruktion oder Funktion sind figurenübergreifend mit den gleichen Bezugszeichen gekennzeichnet.

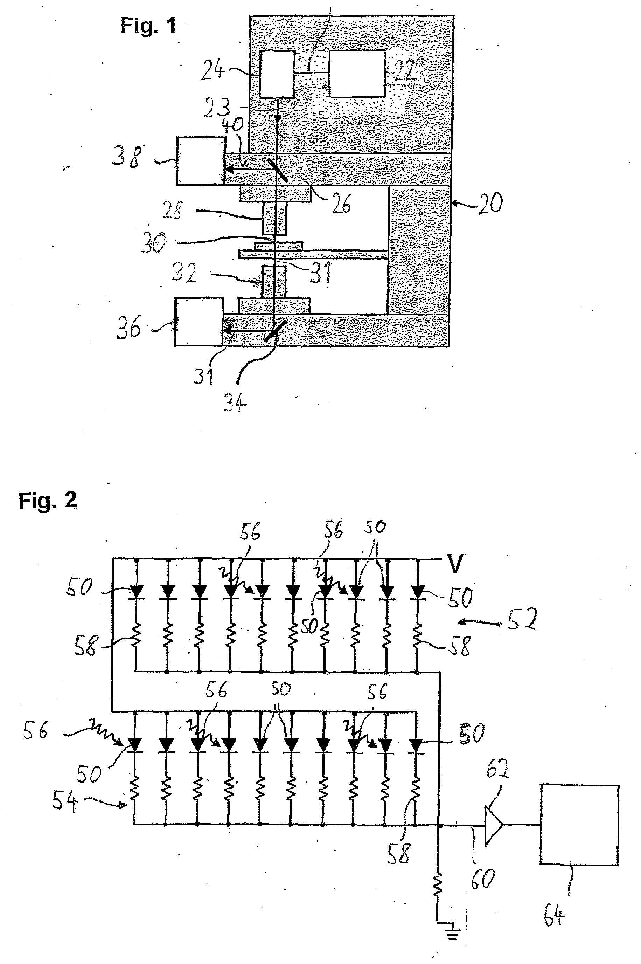

Figur 1 zeigt ein Scan-Mikroskop 20, das zumindest eine Lichtquelle 22 hat. Die Lichtquelle 22 erzeugt einen Beleuchtungslichtstrahl 23, der über eine Scaneinheit 24 und einen Strahlteiler 26 mit Hilfe eines ersten Objektivs 28 auf eine Probe 30 fokussiert wird. Ein von der Probe in Beleuchtungsrichtung ausgehender erster Detektionsstrahl 31 wird über ein zweites Objektiv 32 und einen Spiegel 34 auf eine erste Detektoranordnung 36 gelenkt. Ein von der Probe 30 entgegen der Beleuchtungsrichtung ausgehender zweiter Detektionsstrahl 40 wird über den Strahlteiler 26 auf eine zweite Detektoranordnung 38 gelenkt. Die Detektionsstrahlen 31 und 40 werden nicht mit Hilfe der Scaneinheit 24 abgelenkt. Die erste und zweite Detektoranordnung 36, 38 werden daher auch als "Non-Descanned-Detektoren" (NDD) bezeichnet. Das Scan-Mikroskop 20 kann auch als Vorrichtung umfassend ein Mikroskop zum Untersuchen der Probe 30 bezeichnet werden. Zusätzlich zu den Detektionsstrahlen 31 und 40 können weitere Detektionsstrahlen entstehen, die über die Scaneinheit 24 zurückgeführt werden und die mit Hilfe eines oder mehrerer nicht dargestellten Detektoren detektiert werden. Somit kann das Scan-Mikroskop 20 ein konfokales Scan-Mikroskop sein.

Das erste Objektiv 28 fokussiert den Beleuchtungslichtstrahl 23 auf einen Fokusbereich auf oder in der Probe 30. Der Fokusbereich ist punktförmig ausgebildet. Alternativ dazu kann der Fokusbereich linienförmig ausgebildet sein, beispielsweise bei Verwendung eines Zeilenscanners. Beim Scannen der Probe 30 wird der Fokusbereich in x- und y-Richtung innerhalb einer Ebene bewegt, die senkrecht auf dem Beleuchtungslichtstrahl 23 steht. Dabei wird vorzugsweise ein geschlossenes Scanfeld optisch abgetastet. Bereich Zusätzlich kann der Fokusbereich auch in z-Richtung senkrecht zu der Ebene bewegt werden.

Die von der Probe 30 ausgehenden Detektionsstrahlen 31, 40 entstehen im Wesentlichen aus Fluoreszenzeffekten, die infolge der Beleuchtung der Probe 30 auftreten. Dabei können auch spezielle Effekte, wie beispielsweise 2- oder Mehr-Photoneneffekte. Mikroskopieverfahren, bei denen die erfindungsgemäßen Vorrichtungen anwendbar sind, oder dabei auftretende mit der Baueinheit 20 zu beobachtende Effekte sind insbesondere FLIM (Fluoreszenz Lifetime Imaging), FRAP (Fluorescence Recovery After Photobleaching), FRET (Fluoreszenz Resonanz Energie Transfer) und FCS (Fluoreszenz-Korrelations-Spektroskopie).

Da der Beleuchtungslichtstrahl 23 durch die Scaneinheit 24 abgelenkt wird, die Detektionslichtstrahlen 31 und 40 jedoch nicht konfokal rückgeführt werden und daher auch deren Strahlverlauf nicht durch die Scaneinheit 24 korrigiert wird, werden auch die Detektionslichtstrahlen 31 und 40 auf einer Oberfläche der ersten und zweiten Detektoranordnung 36, 38 bewegt. Damit die Detektionslichtstrahlen 31, 40 in jeder Scanposition der Scaneinheit 24 zuverlässig detektiert werden können, weist jede der Detektoranordnungen 36, 38 jeweils zwei oder mehr photosensitive Halbleiterelemente 50 auf, wie in Figur 2 gezeigt. Somit bilden die photosensitiven Halbleiterelemente 50 die Detektoranordnungen 36, 38, die jeweils auch als Sensorarray oder Detektorarray bezeichnet werden können.

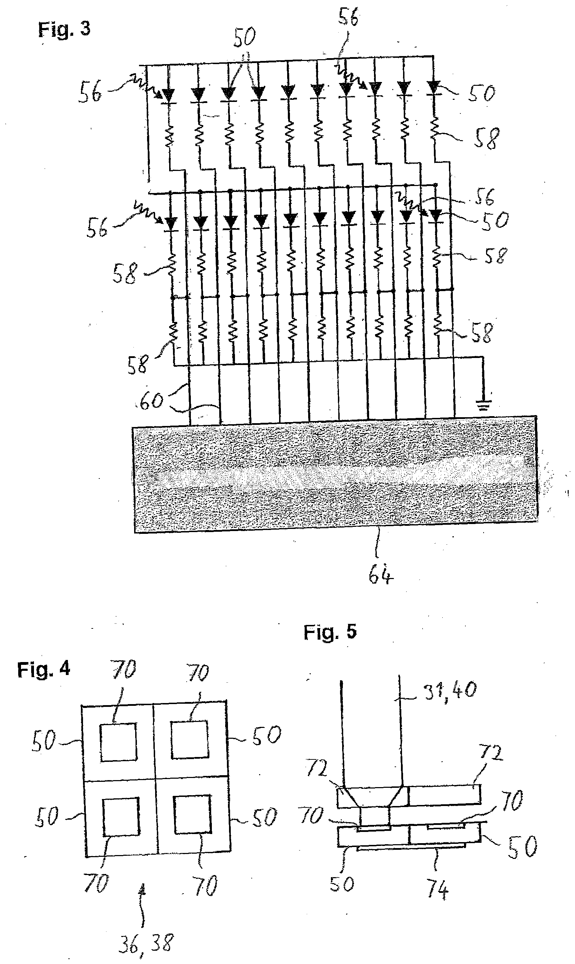

Als Halbleiterelemente 50 werden Lawinenfotodioden (Avalanche-Photo-Diods, APD) verwendet. Diese werden oberhalb ihrer Durchbruchspannung im Geigermodus betrieben. Zum Auswerten werden alle Einzelimpulse analog aufsummiert, so dass das Gesamtsignal proportional zur Anzahl der einfallenden Photonen ist. Alternativ oder zusätzlich können die Einzelimpulse direkt ausgewertet und im Messinterval gezählt werden. Durch die Verwendung mehrerer Lawinenfotodioden kann der Nachteil, der durch Verwendung der Lawinenfotodiode im Geigermodus entsteht, nämlich die längere Totzeit, kompensiert werden. Ferner können Analog-Summation und Direkt-Auswertung kombiniert werden, wie in Figur 3 gezeigt.

Figur 2 zeigt eine mögliche Schaltung, gemäß der die einzelnen Halbleiterelemente 50 einer Detektoranordnung 36, 38 miteinander elektrisch verbunden sein können. Dabei sind die Halbleiterelemente 50 in Reihe mit je einem Vorwiderstand 58 jedoch parallel zueinander geschaltet. Insbesondere hat die dargestellte Ausführungsform der Detektoranordnung 36, 38 eine erste Reihe 52 und eine zweite Reihe 54 von Halbleiterelementen 50. Die parallel geschalteten Halbleiterelemente 50 liegen über eine einzige Ausgangsleitung 60 an einem Verstärker 62 an, der die Signale der Halbleiterelemente 50 für eine gemeinsame Auswerteeinheit 64 verstärkt. Die Auswerteeinheit 64 summiert die einzelnen Detektionsereignisse analog auf. Nach jedem detektierten Ereignis hat eines der Halbleiterelemente 50 eine kurze Totzeit, während der kein neues Photon 56 detektiert werden kann. Die Verwendung mehrerer Halbleiterelemente 50, die parallel geschaltet sind, verringert für die gesamte Detektoranordnung 36, 38 die Totzeit, da je eines der Halbleiterelemente 50 durchaus ein Photon 56 detektieren kann, während beispielsweise ein benachbartes Halbleiterelement 50 sich gerade in seiner Totzeit befindet.

Die Totzeit kann weiter verringert werden, wenn eine Baugruppe (nicht dargestellt) zum Zurücksetzen der Halbleiterelemente 50 vorgesehen ist, wobei die Kapazität der Halbleiterelemente 50 passiv mit Hilfe der Baugruppe zurücksetzbar ist. Alternativ oder zusätzlich dazu kann eine eigene Schaltung vorgesehen sein, die die Kapazität der Halbleiterelemente 50 aktiv zurücksetzt.

Figur 3 zeigt eine alternative Schaltung der Halbleiterelemente 50, bei der jeweils zwei der Halbleiterelemente 50 parallel zueinander geschaltet sind und über jeweils eine Ausgangsleitung 60 mit der Auswerteeinheit 64 verbunden sind. Diese Schaltung ermöglicht, jeweils die Einzelsignale der beiden parallel geschalteten Halbleiterelemente 50 als Paar unabhängig von den anderen Paaren der Halbleiterelemente 50 zu erfassen. Die Detektionsereignisse können dann analog aufsummiert und paarweise ausgewertet werden.

Die in Figur 2 und Figur 3 gezeigten Ausführungsbeispiele können einfach miteinander kombiniert werden, indem jeweils eine beliebige Anzahl von parallel geschalteten Halbleiterelementen 50 über einen gemeinsamen Ausgang 60 zusammen erfasst werden. So kann einfach die Chipstruktur, insbesondere die Anzahl der Ausgänge 60 vorgegeben werden.

Die Figuren 4 und 5 zeigen ein Ausführungsbeispiel in Draufsicht bzw. Seitenansicht, bei dem die Quantenausbeute der Detektoranordnungen 36, 38 besonders groß ist. Dabei weisen die Seiten der Halbleiterelemente 50, die den Detektionsstrahlen 31, 40 zugewandt sind, einen möglichst großen, möglichst geschlossenen lichtempfindlichen Bereich 70 auf. In anderen Worten ist der Füllfaktor an lichtempfindlicher Fläche möglichst groß. Dies wird zum Einen dadurch erzielt, dass die photosensitiven Halbleiterelemente 50 möglichst lückenfrei aneinander anschließen. Zum Anderen werden dabei Halbleiterelemente 50 verwendet, die auf der back-thinned Technologie basieren, bei welcher lichtunempfindliche Strukturen 74 der Halbleiterelemente 50, beispielsweise Kontakte, auf der von den Detektionsstrahlen 31, 40 abgewandten Seite des entsprechenden Halbleiterelements 50 angeordnet sind. Die Quantenausbeute wird weiter erhöht, indem vor jedem lichtempfindlichen Bereich 70 eines Halbleiterelements 50 je eine Linse 72 angeordnet ist. Die Linse 72 fokussiert das Licht der Detektionslichtstrahlen 31, 40 auf den lichtempfindlichen Bereich 70 je eines Halbleiterelements 50. Die einzelnen Linsen 72 können auch als Einheit zusammengefasst werden und als Linsenanordnung oder als Mikrolinsenarray bezeichnet werden.

Ein Dunkelrauschen einer oder beider Detektoranordnungen 36, 38 wird besonders gering gehalten, indem die entsprechende Detektoranordnung 36, 38 thermisch mit einer Kühlvorrichtung gekoppelt und dadurch gekühlt wird. Die Kühlvorrichtung kann beispielsweise Peltier-Elemente, insbesondere mehrstufige Peltier-Elemente aufweisen. Darüber hinaus können die Detektoranordnungen 36, 38 optional in einer Schutzatmosphäre angeordnet sein. Die Schutzatmosphäre verhindert das Entstehen von Kondensat an den photosensitiven Bereichen 70 der Halbleiterelemente 50. Dies ist besonders zum Detektieren kleiner Signale, die sich ohne Kühlung oder Schutzatmosphäre nur geringfügig oder gar nicht vom Dunkelrauschen abheben, vorteilhaft.

Die Detektionslichtstrahlen 31, 40 werden in einen Lichtleiter (nicht dargestellt) eingekoppelt, bevor sie detektiert werden. Dabei ist die erfindungsgemäße Verwendung eines Flüssiglichtleiters besonders vorteilhaft, da er zum Einen relativ gute Transmissionseigenschaften aufweist und da er zum Anderen mit einem relativ großen Durchmesser hergestellt werden kann. Der große Durchmesser erleichtert es, auch stark abgelenkte Detektionsstrahlen 31, 40 sicher auf den Querschnitt des entsprechenden Lichtleiters und so mit näherungsweise keinen Auswirkungen auf die Detektionsqualität auf eine der Detektoranordnungen 36, 38 abzubilden.

Die Erfindung ist nicht auf die angegebenen Ausführungsbeispiele beschränkt. Beispielsweise können als Halbleiterelemente 50 auch andere lichtempfindliche Bauelemente für die Detektoranordnungen 36, 38 verwendet werden. Ferner können lediglich eine oder weitere Detektoranordnungen 36, 38 angeordnet sein. Beispielsweise können zum Detektieren von unterschiedlichen spektralen Bereichen der Detektionsstrahlen 31, 40 jeweils unterschiedliche Detektoranordnungen 36, 38 vorgesehen sein. In einer nicht unter die Ansprüche fallenden Alternative kann das Scan-Mikroskop anstatt der Scaneinheit 24 einen Scantisch umfassen, auf dem die Probe 30 angeordnet ist und der die Probe 30 unter dem auf die Probe 30 gelenkten Beleuchtungslichtstrahl 23 bewegt und dadurch einen Fokusbereich des Beleuchtungslichtstrahls 23 innerhalb des vorgegebenen Scanfelds auf oder in der Probe 30 bewegt.

### Bezugszeichenliste:

- 20: Scan-Mikroskop
- 22: Lichtquelle
- 23: Beleuchtungslichtstrahl
- 24: Scaneinheit
- 26: Strahlteiler
- 28: erstes Objektiv
- 30: Probe
- 31: erster Detektionsstrahl
- 32: zweites Objektiv
- 34: Spiegel
- 36: erste Detektoranordnung
- 38: zweite Detektoranordnung
- 40: zweiter Detektionsstrahl
- 50: Halbleiterelement
- 52: erste Reihe
- 54: zweite Reihe
- 56: Lawinenphotodiode
- 58: Vorwiderstand
- 60: Ausgang
- 62: Verstärker
- 64: Auswerteeinheit
- 70: lichtempfindlicher Bereich
- 72: Linse
- 75: lichtunempfindlicher Bereich

## Patentansprüche

1. Vorrichtung zum Untersuchen einer Probe (30), umfassend
ein Mikroskop,
mit einer Lichtquelle (22), die einen Beleuchtungslichtstrahl (23) erzeugt, einer Scaneinheit (24), die den über ein Objektiv auf die Probe (30) gelenkten Beleuchtungslichtstrahl (23) ablenkt und dadurch einen Fokusbereich des Beleuchtungslichtstrahls (23) innerhalb eines vorgegebenen Scanfelds auf oder in der Probe (30) bewegt,
und mit mindestens einer Detektoranordnung (36), die zwei oder mehr photosensitive Halbleiterelemente (50) umfasst und die einen von der Probe (30) ausgehenden und von der Scaneinheit (24) nicht abgelenkten Detektions-Lichtstrahl (31, 40) detektiert,
wobei die Vorrichtung **dadurch gekennzeichnet, dass** zumindest zwei Halbleiterelemente (50) elektrisch parallel geschaltet und über eine gemeinsame Ausgangsleitung (60) mit einer Auswerteeinheit (64) verbunden sind, wobei die Halbleiterelemente (50) jeweils eine Lawinenfotodiode aufweisen, die oberhalb ihrer Durchbruchspannung im Geigermodus betrieben wird, und
dass der Detektionsstrahlengang über einen Flüssiglichtleiter verläuft.

2. Vorrichtung nach Anspruch 1, bei der entlang des Detektionsstrahlengangs (40) vor jedem Halbleiterelement (50) je eine Linse (72) angeordnet ist, die den Detektions-Lichtstrahl (31, 40) auf das entsprechende Halbleiterelement (50) fokussiert.

3. Vorrichtung nach einem der vorstehenden Ansprüche, bei der lichtunempfindliche Strukturen (74) der Halbleiterelemente (50) auf einer von dem Detektions-Lichtstrahl (31, 40) abgewandten Seite der Halbleiterelemente (50) angeordnet sind.

4. Vorrichtung nach einem der vorstehenden Ansprüche, bei der die Detektoranordnung (36) in einer Schutzatmosphäre angeordnet und/oder thermisch mit einer Kühleinheit gekoppelt ist.

5. Vorrichtung nach einem der vorstehenden Ansprüche, mit einer Baugruppe zum Zurücksetzen der Halbleiterelemente (50), die die Kapazität der Halbleiterelemente (50) passiv oder aktiv zurücksetzt.

## Claims

1. Device for examining a sample (30), comprising
a microscope,
having a light source (22), which generates an illumination light beam (23), a scanning unit (24), which deflects the illumination light beam (23) directed onto the sample (30) via an objective and thereby moves a focus region of the illumination light beam (23) within a predefined scan field on or in the sample (30),
and having at least one detector arrangement (36), which comprises two or more photosensitive semiconductor elements (50) and which detects a detection light beam (31, 40) that emanates from the sample (30) and is not deflected by the scanning unit (24),
the device being **characterized in that** said two or more semiconductor elements (50) are electrically connected in parallel and are connected to an evaluation unit (64) via a common output line (60), wherein the semiconductor elements (50) each comprise an avalanche photodiode that is operated in the Geiger mode above its breakdown voltage, and
that the detection beam path passes via a liquid light guide.

2. Device according to claim 1, wherein a respective lens (72) is arranged upstream of each semiconductor element (50) along the detection beam path (40), said lens focusing the detection light beam (31, 40) onto the corresponding semiconductor element (50).

3. Device according to any one of the preceding claims, wherein light-insensitive structures (74) of the semiconductor elements (50) are arranged on a side of the semiconductor elements (50) facing away from the detection light beam (31, 40).

4. Device according to any of the preceding claims, wherein the detector arrangement (36) is arranged in a protective atmosphere and/or is thermally coupled to a cooling unit.

5. Device according to any of the preceding claims, having an assembly for resetting the semiconductor elements (50), which passively or actively resets the capacitance of the semiconductor elements (50).

## Revendications

1. Dispositif pour examiner un échantillon (30), comprenant
un microscope,
comprenant une source de lumière (22), qui génère un faisceau de lumière d'éclairage (23), une unité de balayage (24), qui dévie le faisceau de lumière d'éclairage (23) dirigé sur l'échantillon (30) via un objectif et déplace ainsi une zone de focalisation du faisceau de lumière d'éclairage (23) à l'intérieur d'un champ de balayage prédéfini sur ou dans l'échantillon (30),
et comprenant au moins un arrangement détecteur (36), qui comporte deux éléments semiconducteurs photosensibles (50) ou plus et qui détecte un faisceau de lumière de détection (31, 40) émanant de l'échantillon (30) et non dévié par l'unité de balayage (24),
le dispositif étant **caractérisé en ce que** lesdits deux éléments semiconducteurs (50) ou plus sont branchés électriquement en parallèle et sont reliés par le biais d'une ligne de sortie (60) commune à une unité d'interprétation (64), les éléments semiconducteurs (50) possédant respectivement une photodiode à avalanche qui, au-dessus de sa tension de claquage, fonctionne en mode Geiger, et
que le trajet de faisceau de détection suit un tracé par un guide de lumière liquide.

2. Dispositif selon la revendication 1, avec lequel une lentille (72) est respectivement disposée le long du trajet de faisceau de détection (40) devant chaque élément semiconducteur (50), laquelle focalise le faisceau de lumière détection (31, 40) sur l'élément semiconducteur (50) correspondant.

3. Dispositif selon l'une des revendications précédentes, avec lequel les structures insensibles à la lumière (74) des éléments semiconducteurs (50) sont disposées sur un côté des éléments semiconducteurs (50) à l'opposé du faisceau de lumière détection (31, 40).

4. Dispositif selon l'une des revendications précédentes, avec lequel l'arrangement détecteur (36) est disposé dans une atmosphère contrôlée et/ou est couplé thermiquement avec une unité de refroidissement.

5. Dispositif selon l'une des revendications précédentes, comprenant un sous-ensemble destiné à réinitialiser les éléments semiconducteurs (50), lequel réinitialise passivement ou activement la capacité des éléments semiconducteurs (50).
